# EUROPEAN PATENT SPECIFICATION

(11) **EP 2 142 599 B1**
(45) Date of publication and mention of the grant of the patent: **14.12.2016**
(21) Application number: 08736496.4
(22) Date of filing: 23.04.2008
(51) Int. Cl.: C08G 75/23, C08L 81/02, C08L 81/06, C08L 71/00, C08L 79/08

(54) **FRICTION AND WEAR RESISTANT ARTICLES**
REIBUNG UND VERSCHLEISSFESTE GEGENSTÄNDE
OBJETS RÉSISTANT AU FROTTEMENT ET À L'USURE

(30) Priority: 23.04.2007 US 913395 P; 04.05.2007 US 915973 P
(43) Date of publication of application: 13.01.2010
(73) Proprietor: Solvay Specialty Polymers USA, LLC., Alpharetta, GA 30005 (US)
(72) Inventor: EL-HIBRI, Mohammad, Jamal, Atlanta, GA 30328 (US); RYAN, Edward, Roswell, GA 30075 (US); HARRY, Nathaniel, Cumming, GA 30040 (US); EMPAYNADO, Romano, Suwanee, GA 30024 (US); STERN, Brian, A., Duluth, GA 30097 (US)
(74) Representative: Vande Gucht, Anne
(86) International application number: PCT/EP2008/054918
(87) International publication number: WO 2008/129059

(56) References cited:
- EP-A- 0 062 830
- EP-A- 0 241 019
- EP-A- 1 361 261
- EP-A- 1 416 015
- US-A- 4 421 588

## Description

### CROSS-REFERENCE TO RELATED APPLICATIONS

This application claims priority to U.S. provisional application No. 60/913,395 filed April 23, 2007 and U.S. provisional application No. 60/915,973 filed May 04, 2007, the whole content of both applications being incorporated herein by reference.

### FIELD OF THE INVENTION

The present invention relates to an article comprising at least one part having a bearing surface, particularly useful for friction and wear applications.

Moreover, the present invention also relates to a polymer composition which is especially well suited for the manufacture of said article.

### BACKGROUND OF THE INVENTION

The field of tribology deals with the science and technology of friction, lubrication and wear. Tribology is defined as the science of interacting surfaces in relative motion. Tribology generally involves the study of friction, wear, and lubrication in relation to such surfaces. Tribological materials are commonly characterized by diverse parameters including, *inter alia,* wear, load and velocity carrying capacity, coefficient of friction, stiffness, and dimensional stability. The "wear" of a material generally refers to the amount of material removed from a bearing surface as a result of the relative motion of the bearing surface against a surface with which the bearing surface interacts. The wear of a material is commonly reported as a "wear factor", which has proven to be highly reliable as a relative measure of the performance of materials under the same operating conditions.

Articles having a bearing surface combining improved tribological (i.e. friction and wear of interacting surfaces in relative motion) and mechanical capabilities are sought for several industrial sectors for friction and wear applications.

Plastic tribological materials are usually used for bearing applications. Prior art polymer compositions for friction and wear applications generally comprise semi-crystalline and/or amorphous engineered polymers or mixtures thereof [e.g. poly(ether ketone) (PEK), poly(ether ether ketone) (PEEK), poly(tetrafluoro ethylene) (PTFE), polycarbonates (PC), liquid crystalline polyesters (LCP), acetal copolymers, aliphatic or aromatic polyamides, polysulfone (PSF), poly(ether sulfone) (PES), poly(phenyl sulfone) (PPSF), poly(ether ether sulfone) (PEES), polyamide-imides (PAI), polyimides (PI)].

Research constantly strives to improve tribological performance by optimizing the formulations of existing composite materials and/or by replacing existing materials with entirely new polymer compositions. Due to the complexity of tribological phenomena, this type of research is still mostly empirical.

Plastic bearings are usually made by incorporating additives such as fillers, reinforcement materials, and/or solid lubricants to a polymer material. The tribological and other properties of such materials depend on the particular polymer matrix material used as well as the particular additives compounded with the polymer matrix material. However, previous art experience teaches that the effects resulting from the incorporation of one or more additives in a polymer matrix are not easily predictable and may even be totally unexpected (especially over a broad range of different operating conditions : temperatures, sliding speeds, pressures, additive loading) and that such effects are strongly dependent on the nature of the polymer matrix. For example, the addition of graphite powder to PAI results in polymer compositions whose specific friction coefficients markedly decrease with temperature, whereas the addition of the same additive to PTFE results in polymer compositions whose friction coefficients are practically constant over a wide range of temperature. Sometimes, an additive expected to improve the tribological performance level of a polymer composition may have detrimental side effects. For instance, ceramic or metallic particulate fillers as well as glass fiber fillers, blended to relatively soft PTFE with the purpose to improve its wear resistance, in parallel increase dry sliding friction coefficient and abrade the counter-face.

Several poly(aryl ether ketone)s are crystalline and exhibit an excellent combination of properties, i.e., excellent thermal and hydrolytic stability, high strength and toughness, excellent wear and abrasion resistance and excellent solvent resistance. Thus articles molded from poly(aryl ether ketone)s have utility where high performance is required. In particular, poly(ether ether ketone) (PEEK) is widely used today in the formulation of friction and wear formulations intended for wear resistant type applications. PEEK, however, is a very expensive resin, and there is a need in the marketplace for a material that would offer most of the thermal and wear resistance benefits of PEEK friction and wear formulations but at a reduced cost.

US 4,684,699 discloses an alloy comprising from about 2 to 98 wt. % of a poly(arylene sulfide) and from 98 to 2 wt. % of a crystalline poly(aryl ether ketone) but keeps silent about any article having a bearing surface comprising such polymer compositions or about any friction and wear application of such polymer compositions.

US 4,421,588 discloses compositions for bearing materials, wherein the compositions consist substantially of an alloy of aromatic polyether ketone and polyarylene sulfide.

There is a thus need for an article having a bearing surface, particularly useful for friction and wear applications, comprising a poly(aryl ether ketone) composition that would offer most of the thermal and wear resistance benefits of prior art poly(aryl ether ketone) friction and wear compositions but at a reduced cost.

### DESCRIPTION OF THE INVENTION

It has been found surprisingly that an article comprising at least one part having a bearing surface, said part being composed of a polymer composition comprising at least one poly(aryl ether ketone) (P1) and at least one poly(arylene sulfide) (P2), wherein :
- the combined weight of the poly(aryl ether ketone) (P1) and the poly(arylene sulfide) (P2), based on the total weight of the polymer composition, is lower than 0.75, andthe poly(arylene sulfide) (P2) over poly(aryl ether ketone) (P1) weight ratio is comprised between 0.2 and 0.8, and wherein
- the polymer composition further comprises at least one friction reducing additive, the friction reducing additive over polymer composition weight ratio is of at least 0.10
   meets these expectations.

Good results were obtained when the friction reducing additive over polymer composition weight ratio was of at least 0.30.

By blending the poly(aryl ether ketone) (P1) with the poly(arylene sulfide) (P2) in accordance with the above specified poly(arylene sulfide) (P2) over poly(aryl ether ketone) (P1) weight ratio (i.e. between 0.2 and 0.8) and by lowering the combined weight of the poly(aryl ether ketone) (P1) and the poly(arylene sulfide) (P2) to less than 0.75 based on the total weight of the polymer composition, the cost of the polymer components (P1) and (P2) in the part having a bearing surface was significantly decreased, resulting in the presently invented cost-attractive article. It was further surprisingly found that the wear resistance performance of the part composed of the polymer composition, when this one further comprised a friction reducing additive, was maintained to a level substantially identical to that of a part composed of the same polymer composition but free of poly(arylene sulfide) (P2), said poly(arylene sulfide) (P2) having been completely replaced, weight pro weight, by said poly(aryl ether ketone) (P1).

Another aspect of the present invention is directed to the polymer composition itself of which the above described part is composed. Accordingly, the present invention also concerns a polymer composition, which is especially well suited for the manufacture of a part having a bearing surface, of an article, said polymer composition comprising at least one poly(aryl ether ketone) (P1) and at least one poly(arylene sulfide) (P2), wherein :
- the combined weight of the poly(aryl ether ketone) (P1) and the poly(arylene sulfide) (P2), based on the total weight of the polymer composition, is lower than 0.75, and
- the poly(arylene sulfide) (P2) over poly(aryl ether ketone) (P1) weight ratio is comprised between 0.2 and 0.8, and wherein
- the polymer composition further comprises at least one friction reducing additive, the friction reducing additive over polymer composition weight ratio is of at least 0.10.

Good results were obtained when the friction reducing additive over polymer composition weight ratio was of at least 0.30.

### The polymer composition

As previously mentioned, the polymer composition according to the present invention comprises at least one poly(aryl ether ketone) (P1) and at least one poly(arylene sulfide) (P2).

In the polymer composition according to the present invention, the combined weight of the poly(aryl ether ketone) (P1) and the poly(arylene sulfide) (P2), based on the total weight of the polymer composition, is lower than 0.75 ; it is preferably of at most 0.70, more preferably of at most 0.65 and still more preferably of at most 0.60. On the other hand, the combined weight of the poly(aryl ether ketone) (P1) and the poly(arylene sulfide) (P2), based on the total weight of the polymer composition, is usually of at least 0.30, preferably of at least 0.40, more preferably of at least 0.45 and still more preferably of at least 0.50.

Also, in the polymer composition according to the present invention, the poly(arylene sulfide) (P2) over poly(aryl ether ketone) (P1) weight ratio is comprised between 0.2 and 0.8. The poly(arylene sulfide) (P2) over poly(aryl ether ketone) (P1) weight ratio is preferably of at least 0.25, more preferably of at least 0.3, still more preferably of at least 0.4 and the most preferably of at least 0.45. On the other hand, the poly(arylene sulfide) (P2) over poly(aryl ether ketone) (P1) weight ratio is preferably of at most 0.7, more preferably of at most 0.6, and still more preferably of at most 0.55.

### The poly(aryl ether ketone) (P1)

For the purpose of the present invention, the term "poly(aryl ether ketone)" is intended to denote any polymer of which more than 50 wt. % of the recurring units are recurring units (R1) comprising at least one carbonyl group in-between two arylene groups, said recurring units (R1) being of one or more of the following formulae : 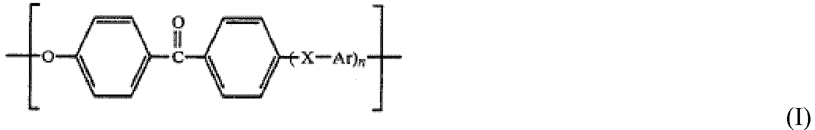 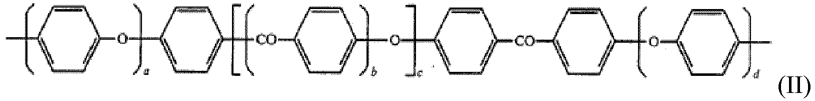 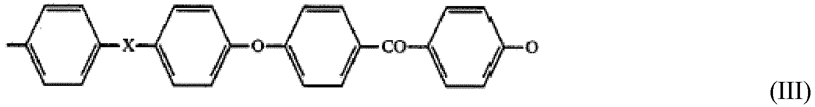 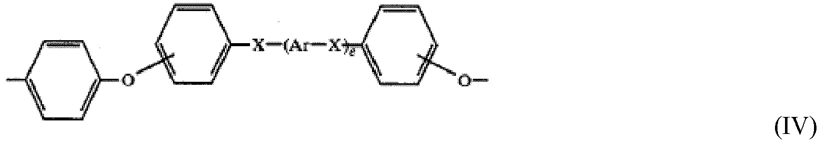 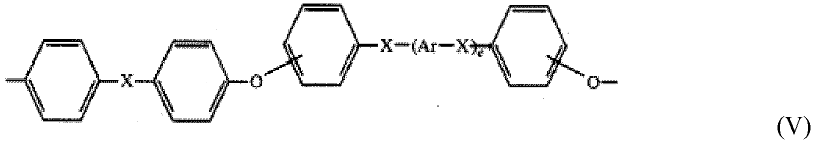 wherein :
- Ar is independently a divalent aromatic radical selected from phenylene, biphenylene or naphthylene,
- X is independently O, C(=O) or a direct bond,
- n is an integer of from 0 to 3,
- b, c, d and e are 0 or 1,
- a is an integer of 1 to 4, and
- preferably, d is 0 when b is 1.

Recurring units (R1) may notably be chosen from : 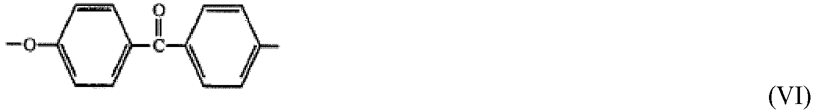 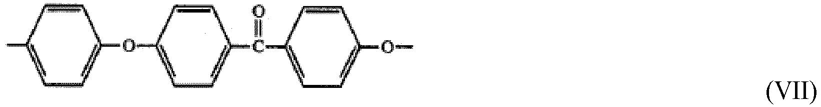 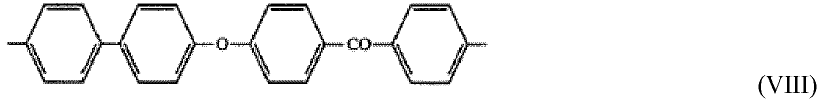 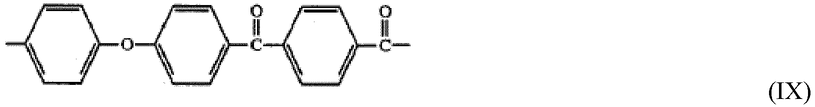 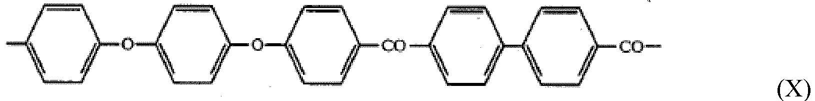 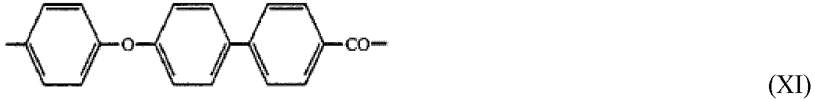 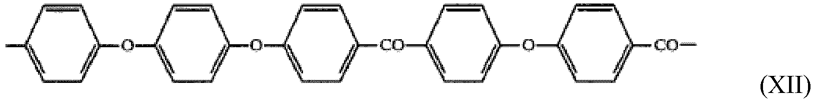 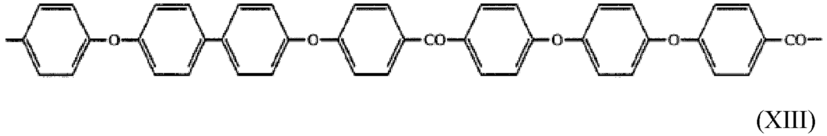 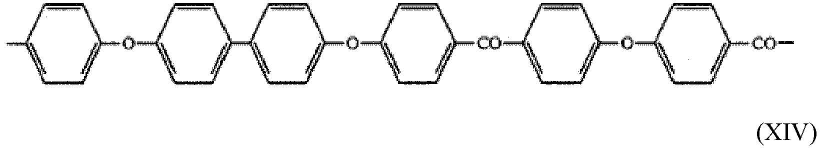 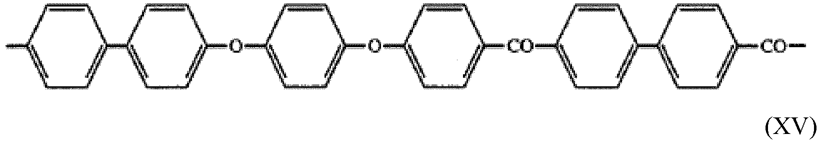 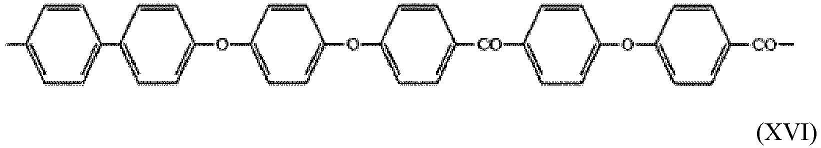 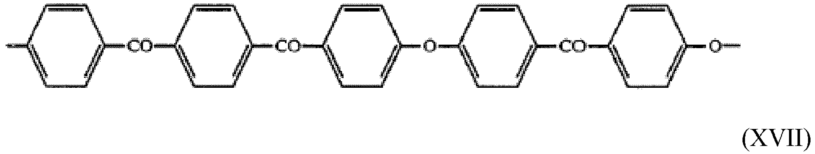 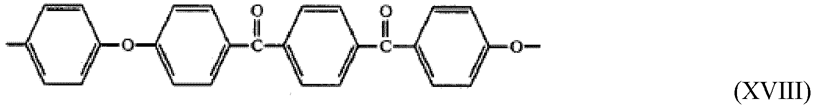 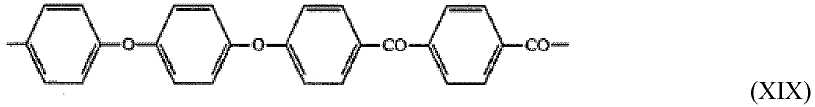 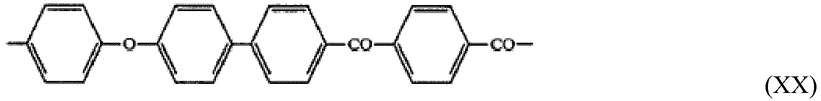 and

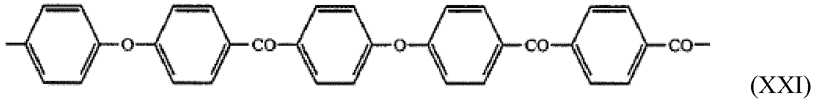

Preferably, recurring units (R1) are chosen from : 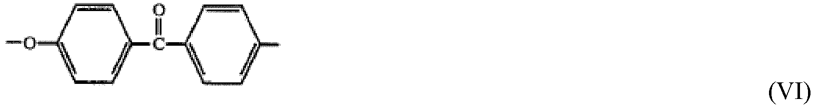 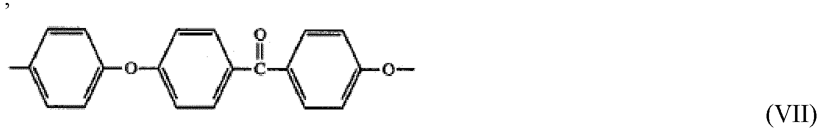 and

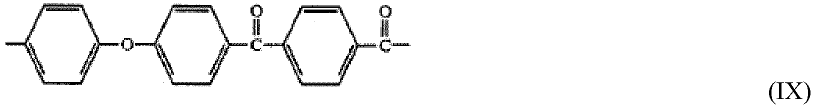

The poly(aryl ether ketone) (P1) according to the present invention is preferably selected from the group consisting of poly(ether ether ketone), poly(ether ketone), poly(ether ketone ketone) and mixtures thereof.

For the purpose of the present invention, a poly(ether ketone) is intended to denote any polymer of which more than 50 wt. % of the recurring units are recurring units (R1) of formula (VI).

For the purpose of the present invention, a poly(ether ether ketone) is intended to denote any polymer of which more than 50 wt. % of the recurring units are recurring units (R1) of formula (VII).

For the purpose of the present invention, a poly(ether ketone ketone) is intended to denote any polymer of which more than 50 wt. % of the recurring units are recurring units (R1) of formula (IX).

More preferably, recurring units (R1) are :

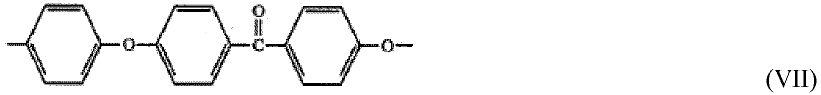

Preferably more than 70 wt. %, and more preferably more than 85 wt. % of the recurring units of the poly(aryl ether ketone) (P1) are recurring units (R1). Still more preferably, essentially all the recurring units of the poly(aryl ether ketone) (P1) are recurring units (R1).Most preferably, all the recurring units of the poly(aryl ether ketone) (P1) are recurring units (R1).

Excellent results were obtained when the poly(aryl ether ketone) (P1) is a poly(ether ether ketone) homopolymer, i.e. a polymer of which essentially all, if not all, the recurring units are of formula (VII). VICTREX^{®} 150 P and VICTREX^{®} 450 P PEEKs from Victrex Manufacturing Ltd., and GATONE^{®} and KETASPIRE^{®} PEEKs from Solvay Advanced Polymers, L.L.C. are examples of poly(ether ether ketone) homopolymers.

The weight amount of polymer (P1) with respect to the total weight of the polymer composition is preferably of at least 20 wt. % and, more preferably, of at least 30 wt. % ; in addition, the weight amount of polymer (P1) with respect to the total weight of the polymer composition is preferably of at most 70 wt. %, more preferably of at most 60 wt. %, still more preferably of at most 50 wt. %, and the most preferably of at most 40 wt. %.

### The poly(arylene sulfide) (P2)

For the purpose of the present invention, a poly(arylene sulphide) (P2) is intended to denote a polymer of which more than 50 wt. % of the recurring units are recurring units (R2) of one or more formula of the general type :

- Ar - S - (R2)

wherein the Ar group denotes an optionally substituted arylene group, such a phenylene or a naphthylene group, which is linked by each of its two ends to two sulfur atoms forming sulphide groups via a direct C-S linkage. Preferred recurring units Ar are optionally substituted p-phenylene (resulting in recurring units (R2) like 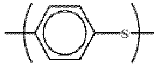 ) and optionally substituted m-phenylene (resulting in recurring units (R2) like 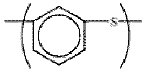 ).

The optionally substituted arylene group Ar may be unsubstituted, which is often preferred.

In certain embodiments, the optionally substituted arylene group Ar may be substituted by one or more substituting groups, including but not limited to halogen atoms, C₁-C₁₂ alkyls, C₇-C₂₄ alkylaryls, C₇-C₂₄ aralkyls, C₆-C₁₈ aryls, C₁-C₁₂ alkoxy groups, and C₆-C₁₈ aryloxy groups, and substituted or unsubstituted arylene sulphide groups themselves, the arylene groups of which are also linked by each of their two ends to two sulfur atoms forming sulphide groups via a direct C-S linkage, like in : 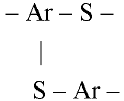 and 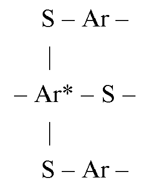 thereby creating branched, up to cross-linked polymer chains.

The poly(arylene sulphide) contains preferably more than 70 wt. % ; more preferably more than 80 wt. %, and still more preferably more than 90 wt. % of recurring units (R2). Most preferably, it contains no recurring unit other than (R2).

A preferred poly(arylene sulphide) is poly(phenylene sulphide), i.e., a polymer of which more than 50 wt. % of the recurring units are recurring units of one or more formula of the general type :

- pPh - S - (R3)

wherein the pPh group denotes an optionally substituted p-phenylene group which is linked by each of its two ends to two sulfur atoms forming sulphide groups via a direct C-S linkage.

pPh may be unsubstituted, which is often preferred.

In certain embodiments, pPh may be substituted by one or more substituting groups, including but not limited to halogen atoms, C₁-C₁₂ alkyls (resulting in substituted units (R3) like 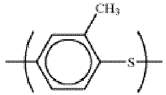 and 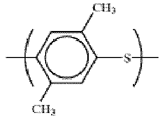 ), C₇-C₂₄ alkylaryls, C₇-C₂₄ aralkyls, C₆-C₁₈ aryls, C₁-C₁₂ alkoxy groups, C₆-C₁₈ aryloxy groups, and substituted or unsubstituted arylene sulphide groups themselves (possibly, substituted or unsubstituted p-phenylene sulphide groups themselves), the arylene groups of which are also linked by each of their two ends to two sulfur atoms forming sulphide groups via a direct C-S linkage, such as : 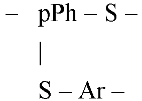 (like 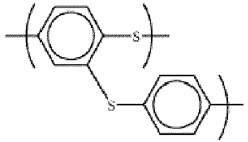 ) and

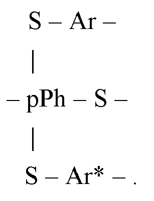

The polyphenylene sulphide contains preferably more than 70 wt. % ; more preferably more than 80 wt. %, and still more preferably more than 90 wt. % of recurring units (R3).

The poly(arylene sulphide), in particular the poly(phenylene sulphide), may further comprise recurring units other than (R2) ; non limitative examples of recurring units other than (R2) are those recurring units capable of being formed by the reaction between Na₂S and a dihalocompound of general formula Cl-Ar°-D-Ar°-Cl through the elimination of the chlorine atoms from the dihalocompound :

Na₂S + Cl - Ar° - D - Ar° - Cl → - Ar° - D - Ar° - S - recurring unit (R4)

wherein Ar° is an optionally substituted arylene group and D may be any diradical other than sulphide (- S -) or than a sulphide-diterminated diradical (- S - D'- S -, where D' may be any diradical).

Both fragments - Ar° - S - of the recurring units (R4) differ from a recurring unit (R2) in that none of the optionally substituted groups Ar° is linked by each of its two ends to two sulfur atoms forming sulphide groups via a direct C-S linkage, at least one end of each arylene group Ar° being linked to D as above defined.

Non limitative examples of recurring units (R4) include :
- Ar°-O-Ar°-S-like 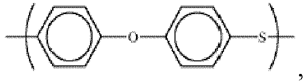
- Ar° - S(=O)₂ - Ar° - S - like 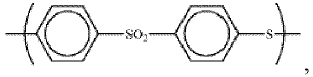
- Ar° - C(=O) - Ar° - S - , like 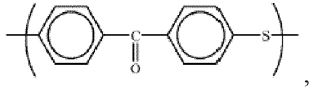 and mixtures thereof, wherein the diradical D is respectively an oxy, sulfonyl or carbonyl diradical.

Good results are obtained when the poly(arylene sulphide) contains no recurring unit other than recurring units (R2). Very good results are obtained when the poly(arylene sulphide) is a poly(phenylene sulphide) which contains no recurring unit other than recurring units (R3). Excellent results can be obtained when the poly(arylene sulphide) is a poly(phenylene sulphide) which contains no recurring unit other than unsubstituted p-phenylene recurring units.

Poly(arylene sulphide)s are commercially available from sources such as Chevron Phillips Chemical Company, Fortron Industries, and GE Plastics. Commercial grades of poly(arylene sulphide)s include PRIMEF^{®}, RYTON^{®}, FORTRON^{®}, and SUPEC^{®} poly(phenylene sulphide)s.

As above explained, the poly(arylene sulphide) (P2) may be in the form of a linear polymer, a branched polymer and/or a cross-linked polymer.

The weight amount of polymer (P2) with respect to the total weight of the polymer composition is preferably of at least 10 wt. % and, more preferably, of at least 15 wt. % ; in addition, the weight amount of polymer (P2) with respect to the total weight of the polymer composition is preferably of at most 50 wt. %, more preferably of at most 40 wt. %, still more preferably of at most 30 wt. % and the most preferably of at most 20 wt. %.

### Optional ingredients of the polymer composition

The polymer composition according to the present invention may comprise no other polymer than the poly(aryl ether ketone) (P1) and the poly(arylene sulfide) (P2). Alternatively, the polymer composition according to the present invention may comprise a third polymer (P3), different from (P1) and (P2) ; for example, a ternary blend composed of at least one poly(aryl ether ketone) (P1), at least one poly(arylene sulfide) (P2) and a third polymer (P3), different from (P1) and (P2), is also within the scope of this invention, provided the weight of the third polymer (P3) is comprised between 0 and 25 wt. %, based on the combined weights of the poly(aryl ether ketone) (P1), the poly(arylene sulfide) (P2) and the third polymer (P3) in the polymer composition.

The polymer composition according to the invention may further contain one or a number of conventional additives in quantities which are not detrimental to the properties of the polymer composition according to the invention. By way of non-limiting examples of such additives, there may be mentioned antioxidants, heat stabilizers, anti-UV agents, flame-retardant agents, antistatic agents, lubricants, corrosion inhibitors, pigments, plasticizers, processing aids, agents for controlling the degree of cross-linking, cross-linking accelerators, and the like.

In an embodiment of the present invention, the polymer composition further comprises at least one friction reducing additive, the friction reducing additive over polymer composition weight ratio being of at least 0.10. The polymer composition may further comprise one and only one friction reducing additive ; alternatively, the at least one friction reducing additive may be a mixture of at least two friction reducing additives.

Then, an aspect of said embodiment concerns an article comprising at least one part having a bearing surface, said part being composed of a polymer composition comprising at least one poly(aryl ether ketone) (P1), at least one poly(arylene sulfide) (P2), and at least one friction reducing additive, wherein :
- the combined weight of the poly(aryl ether ketone) (P1) and the poly(arylene sulfide) (P2), based on the total weight of the polymer composition, is lower than 0.75,
- the poly(arylene sulfide) (P2) over poly(aryl ether ketone) (P1) weight ratio is comprised between 0.2 and 0.8, and
- the friction reducing additive over polymer composition weight ratio is of at least 0.10.

Another aspect of said embodiment concerns also a polymer composition, which is especially well suited for the manufacture of a part having a bearing surface, of an article, said polymer composition comprising at least one poly(aryl ether ketone) (P1), at least one poly(arylene sulfide) (P2), and at least one friction reducing additive, wherein :
- the combined weight of the poly(aryl ether ketone) (P1) and the poly(arylene sulfide) (P2), based on the total weight of the polymer composition, is lower than 0.75,
- the poly(arylene sulfide) (P2) over poly(aryl ether ketone) (P1) weight ratio is comprised between 0.2 and 0.8, and
- the friction reducing additive over polymer composition weight ratio is of at least 0.10.

### The friction reducing additive

According to the present invention, a "friction reducing additive" is intended to denote a potential component of the polymer composition that provides the resultant polymer composition with a decreased coefficient of friction as compared to a comparable polymer composition not including the friction reducing additive. Thus, the friction reducing additive causes the resultant polymer composition and articles comprising said polymer composition to have a more slippery or silky or slick feel, with reduced friction between the polymer composition (or articles comprising said polymer composition) and materials that come into contact with the polymer composition.

The friction reducing additive is preferably selected from the group consisting of fluoropolymers such as poly(tetrafluoro ethylene), carbon fibers, inorganic fibers, polymeric fibers, graphite, silicone oils, siloxane polymers, molybdenum disulfide, boron nitride, silicon carbide, silica, silicon nitride, zirconium oxide, aluminum oxide, and mixtures thereof. It is more preferably selected from the group consisting of fluoropolymers, carbon fibers, polymeric fibers, graphite and mixtures thereof.

In certain preferred embodiments, the friction reducing additive may be a particulate solid type friction reducing additive, which can be of either microscopic or nano-scale dimensions (i.e. where average particle has at least one dimension with a length of under 200 nm). The term "particulate solid" is herein intended to denote a solid having a non fibrous morphology (e.g. sphere, flake, rod, pellet, coarse powder, micro-powder, etc.) or a particulate solid that is obtained by comminuting (i.e. reducing to very small particles by, for example, milling, grinding, pounding or abrading) a fibrous material.

In some demanding applications, as particulate type friction reducing additives, graphite is preferred.

In certain other preferred embodiments, the friction reducing additive may be a lubricious reinforcing fiber. "Fiber," and "fibrous material," as used herein, means a fundamental form of solid (often crystalline) characterized by relatively high tenacity and an extremely high ratio of length to diameter. The fibers may be continuous, discontinuous, milled, chopped, and combinations thereof.

In some demanding applications, as lubricious reinforcing fibers, carbon fibers are preferred.

Carbon fibers useful for the present invention can advantageously be obtained by heat treatment and pyrolysis of different polymer precursors such as, for example, rayon, polyacrylonitrile (PAN), aromatic polyamide or phenolic resin; carbon fibers useful for the present invention may also be obtained from pitchy materials. The term "graphite fiber" intends to denote carbon fibers obtained by high temperature pyrolysis (over 2000°C) of carbon fibers, wherein the carbon atoms place in a way similar to the graphite structure. Carbon fibers useful for the present invention are preferably chosen from the group composed of PAN-based carbon fibers, pitch based carbon fibers, graphite fibers, and mixtures thereof.

Carbon fibers are preferably PAN-based carbon fibers. Examples of such carbon fibers that have been found suitable in the present invention include the carbon fiber Fortafil^{®} 219 grade.

In still certain other perferred embodiments, the article having a bearing surface comprises a mixture of at least two friction reducing additives.

The mixture of at least two friction reducing additives is preferably composed of at least one friction reducing additive chosen from particulate solid type friction reducing additives, and of at least one other friction reducing additive chosen from lubricious reinforcing fibers.

A first more preferred mixture is a blend of carbon fibers and graphite. Still more preferably, it is a blend of graphitized pitch-based carbon fiber and graphite. The carbon fiber over graphite weight ratio is advantageously of at least 1, preferably of at least 1.5 and more preferably of at least 1.75. On the other hand, the carbon fiber over graphite weight ratio is advantageously of at most 3, preferably of at most 2.5 and more preferably of at most 2.25.

Another more preferred mixture is a blend of carbon fibers and poly(tetrafluoro ethylene). Still more preferably, it is a blend of graphitized pitch-based carbon fiber and poly(tetrafluoro ethylene). The carbon fiber over poly(tetrafluoro ethylene) weight ratio is advantageously of at least 1, preferably of at least 1.5 and more preferably of at least 1.75. On the other hand, the carbon fiber over poly(tetrafluoro ethylene) weight ratio is advantageously of at most 3, preferably of at most 2.5 and more preferably of at most 2.25.

The friction reducing additive over polymer composition weight ratio is usually below 0.70, preferably of at most 0.6, more preferably of at most 0.55 and still more preferably of at most 0.50. On the other hand, the friction reducing additive over polymer composition weight ratio is advantageously of at least 0.10, or even at least 0.20, or even above 0.25; it is preferably of at least 0.30, more preferably of at least 0.35 and still more preferably of at least 0.40.

In a particularly preferred embodiment in accordance with the present invention, the polymer composition is composed essentially of, or is even composed of, at least one poly(aryl ether ketone) (P1), at least one poly(arylene sulfide) (P2) and at least one friction reducing additive, wherein :
- the weight of the friction reducing additive, based on the total weight of the polymer composition, is above 0.25, preferably of at least 0.30, more preferably of at least 0.35 and still more preferably of at least 0.40, and
- the poly(arylene sulfide) (P2) over poly(aryl ether ketone) (P1) weight ratio is comprised between 0.2 and 0.8, and wherein
- the polymer composition further comprises at least one friction reducing additive, the friction reducing additive over polymer composition weight ratio being of at least 0.10.

The weight amount of the polymer composition comprised in the part of the article having a bearing surface, with respect to the total weight of said part is advantageously of at least 10 wt. %, preferably of at least 50 wt. %, more preferably of at least 80 wt. %. Still more preferably, said part is essentially composed of the invented polymer composition.

The components of the invented polymer composition, in particular polymer (P1),polymer (P2), optional polymer (P3) and optional friction reducing additive(s), may be blended and kneaded. For example, all the components of the polymer composition may be first blended and subsequently co-extruded. Alternatively, the components may be fed separately into the extruder eventually using different feeding zones. If needed, only some of them may be preliminary blended and subsequently fed into the extruder. For example, the polymer components [polymer (P1) + polymer (P2)] may be blended and subsequently fed into the extruder for kneading whereas the friction reducing additive(s) (together or separately) may be fed downstream.

Generally, said part of the article having a bearing surface has an outstanding balance of tribological and mechanical properties, remarkable dimensional stability, chemical resistance, excellent surface finish (e.g. glossy smooth surface) and tight dimensional accuracy. Due to the above mentioned properties, the article according to the present invention is usually particularly indicated for withstanding severe operating conditions in the frame of long term friction and wear applications (e.g. very low or very high service temperature, aggressive chemical environments, dry or liquid environments; high speeds; low speeds; high loads; very long service-time; elevated PV; etc.).

Advantageously, the article according to the present invention is used as sliding part, in particular as sliding part in a friction and wear application.

Said article includes, but is not limited to, articles such as, for example, bearings that are subjected to relatively high loads, relatively high speeds, or both. "Bearing," and "bearings," as used herein, refers to any article(s) having a surface that interacts with a surface in relative motion, for example, by sliding, pivoting, oscillating, reciprocating, rotating, or the like. Examples of such articles include, but are not limited to, bearings, bushings, gears, sleeve bearings, seal rings, journal bearings, thrust washers, rub strips, slides, bearing pads, ball bearings, including the balls, valve seats, piston rings, valve guides, compressor vanes, seals, both stationary and dynamic, washers and other applications requiring wear resistance and self lubrication.

The article according to the present invention is preferably chosen from bearings including metal-polymer bearings, anti-friction bearing cages, thrust washers, brush washers, bushings, seal rings, slides, cable carriers, ball bearing balls, cam followers and gears.

In a particular embodiment, the article according to the present invention is a chemical mechanical planarization CMP retaining ring comprising at least one part having a bearing surface consisting of the polymer composition as above described. Such a CMP retaining ring has already been exhaustively described in previously cited U.S. provisional application No. 60/913,395 filed April 23, 2007. The CMP retaining ring may be in the form of an annular ring. The CMP retaining ring may have an upper portion for contacting with a substrate carrier and a lower portion for contacting with a substrate, wherein the upper portion is made of a material that is different from the polymer composition of the lower portion. The entire retaining ring may be made of the polymer composition. The retaining ring may be in the form of an angular ring having an incomplete circumference. The retaining ring may have an upper part or portion comprising a metal.

The CMP process, comprises generally : contacting a surface of a wafer with a polishing pad while holding the wafer in a substrate carrier comprising the retaining ring as above described, and polishing the surface of the wafer while rotating at least one of the substrate carrier and the polishing pad, wherein the holding is by contacting the retaining ring with the wafer. The surface of the wafer may be contacted with a polishing pad in the presence of a polishing substance. The surface of the wafer and the polishing pad may be contacted in the presence of an aqueous mixture that comprises a colloidal silica. The substrate may be a silicon wafer; the silicon wafer may have the shape of a circle and the wafer floats within the area defined by the retaining ring during the polishing.

The substrate carrier comprises generally : the CMP retaining ring as above described, a back piece, and a body, wherein the retaining ring is extendable and retractable from the body and the retaining ring is connected to the body with an extension and/or retraction means. The body of the substrate carrier may be rotatable.

Described herein is also the use of an effective amount (ε) of at least one poly(arylene sulfide) (P2) for diluting at least one poly(aryl ether ketone) (P1) contained in a polymer composition, while maintaining the friction and/or wear resistance of the polymer composition to a level at least substantially the same as the polymer composition containing the poly(aryl ether ketone) (P1), absent the poly(arylene sulfide) (P2). The effective amount (ε) of the poly(arylene sulfide) (P2) is advantageously of below 50 wt. %, preferably of below 40 wt. %, and more preferably below 35 wt. %, based on the combined weights of poly(aryl ether ketone) (P1) and poly(arylene sulfide) (P2) in the polymer composition. Besides, ε is advantageously above 15 wt. %, preferably above 25 wt. % and more preferably above 30 wt. %, based on the combined weights of poly(aryl ether ketone) (P1) and poly(arylene sulfide) (P2) in the polymer composition.

Provided below are examples illustrative of the present invention, but not limitative thereof.

### EXAMPLES

Two polymer compositions were prepared according to the present invention, namely polymer compositions E1 and E2. Another polymer composition to the contrary of the invention, namely polymer composition CE1, was also prepared for comparison. The nature and amount of all the ingredients contained in the exemplified polymer compositions are listed in table 1.

The poly(aryl ether ketone) (PEEK) and poly(arylene sulfide) (PPS) used in these experiments were respectively KETASPIRE^{®} KT-880P from Solvay Advanced Polymers, L.L.C and DIC grade T-4G supplied by Dainippon Ink and Chemicals ; PAN based carbon fibers were Fortafil^{®} 219, purchased from Toho Tenax America, Inc. and graphite powder superior grade 4735 FF was purchased from Superior Graphite.

**Table 1**

| Formulations (wt. %) | | | |
|---|---|---|---|
| | **E1** | **E2** | **CE1** |
| PEEK | 36.7 | 36.7 | 55 |
| PPS | 18.3 | 18.3 | - |
| Carbon fibers | 30 | 30 | 30 |
| PTFE | 15 | - | 15 |
| Graphite | - | 15 | - |

### Compounding Conditions

The example and control formulations were compounded on a Berstorff 25 mm co-rotating intermeshing twin screw extruder consisting of eight barrel zones and having an L:D ratio of 40:1. The carbon fiber was fed gravimetrically to the extruder at barrel 5 through a side feeder, whereas the rest of the ingredients of the formulation were in each case tumble blended and fed gravimetrically at barrel 1. Vacuum venting was employed at barrel 7 to remove any moisture or other volatiles from the melt prior to stranding and pelletizing. The strands were cooled by dipping in a water trough then conveyed on a strand table, where the strands were subsequently air cooled then palletized. Barrel temperature settings and other conditions used in compounding the example and control are shown in Table 2.

**Table 2**

| Compounding Run Parameters Used for Compounding of Examples E1, E2 and Control CE1 | |
|---|---|
| | **Set Point** |
| Barrel 1 Temp. (°C) | No Heating |
| Barrel 2 Temp. (°C) | 330 |
| Barrel 3 Temp. (°C) | 330 |
| Barrel 4 Temp. (°C) | 330 |
| Barrel 5 Temp. (°C) | 330 |
| Barrel 6 Temp. (°C) | 340 |
| Barrel 7 Temp. (°C) | 340 |
| Barrel 8 Temp. (°C) | 340 |
| Die Adapter (°C) | 340 |
| Die (°C) | 330 |
| Melt Temperature (°) | 385-395 |
| Screw Speed (RPM) | 220 |
| Vacuum (in Hg) | 27 |
| Feed Rate, Carbon Fiber (lb/hr) | 6 |
| Feed Rate, Other Ingredients (lb/hr) | 14 |
| Total Throughput Rate (lb/hr) | 20 |

Pellet samples produced from the process described above were dried overnight (about 16 hours) in a desiccated convection oven set to a temperature of 300° (149 °C). The dried pellets of the control and example were then injection molded using a standard, 50 ton Sumitomo Injection molding press, (Maximum Hydraulic pressure of 2180 psi) to give the thrust washer test specimens. The molding temperature settings conditions are summarized in Table 3.

**Table 3**

| Molding conditions | |
|---|---|
| | **Set Point** |
| Mold temperature (°F) | 365 |
| Barrel temperatures (°F) : | |
| Zone 1, feed throat | 670 |
| Zone 2 | 710 |
| Zone | 710 |
| Zone 4, nozzle | 700 |

### Wear resistance measurements

The friction and wear testing was done with molded thrust washer specimens using a Falex Multispecimen Test Machine. The specimen geometry and testing was done in accordance with ASTM D3702. Wear resistance measurements results are given in Table 4 for E1, E2 and CE1.

**Table 4**

| Wear factor results (x 10⁻¹⁰ in³-min/ft-lb-hr) | | | |
|---|---|---|---|
| | **E1** | **E2** | **CE1** |
| Lubricated (75 fpm, 1000 psi) | 3.4 | 2.7 | 2.9 |

In a surprising way, invented blends (E1 and E2) achieved to maintain the wear factor at substantially the same level than that of the polymer composition to the contrary of the invention, absent of any PPS (CE1). The invented blend E2 even reached enhanced level of wear resistance, compared to that of the control example (CE1).

Obviously, numerous modifications and variations of the present invention are possible in light of the above teachings. It is therefore to be understood that within the scope of the appended claims, the invention may be practiced otherwise than as specifically described herein.

## Claims

1. An article comprising at least one part having a bearing surface, said part being composed of a polymer composition comprising at least one poly(aryl ether ketone) (P1) and at least one poly(arylene sulfde) (P2), wherein :
- the combined weight of the poly(aryl ether ketone) (P1) and the poly(arylene sulfide) (P2), based on the total weight of the polymer composition is lower than 0.75, and
- the poly(arylene sulfide) (P2) over poly(aryl ether ketone), (P1) weight ratio is comprised between 0.2 and 0.8;
and wherein the polymer composition further comprises at least one friction reducing additive, the friction reducing additive over polymer composition weight ratio is of at least 0.10.

2. The article according to Claim 1, wherein the poly(aryl ether ketone) (P1) is a poly(ether ether ketone) and the poly(arylene sulfide) (P2) is a poly(phenylene sulfide).

3. The article according to Claims 1 or 2, wherein the friction reducing additive over polymer composition weight ratio is of at least 0.30.

4. The article according to Claim 3, wherein the combined weight of the poly(aryl ether ketone) (P1) and the poly(arylene sulfide) (P2), based on the total weight of the polymer composition, is of at least 0.40, and the friction reducing additive over polymer composition weight ratio is of at least 0.40.

5. The article according to any one of Claims 1 to 4, wherein the friction reducing additive is selected from the group consisting of fluoropolymers, carbon fiber, polymeric fibers, graphite, and mixtures thereof.

6. The article according to Claim 5, wherein the friction reducing additive is either a mixture of carbon fiber and graphite, or a mixture of carbon fiber and poly(tetrafluoro ethylene), wherein respectively the carbon fiber over graphite weight ratio or the carbon fiber over poly(tetrafluoro ethylene) weight ratio ranges between 1.75 and 2.25.

7. The article according to any one of the preceding Claims, wherein the poly(arylene sulfide) (P2) over poly(aryl ether ketone) (P1) weight ratio ranges from 0.3 to 0.7.

8. The article according to Claim 7, wherein the poly(arylene sulfide) (P2) over poly(aryl ether ketone) (P1) weight ratio ranges from 0.4 to 0.6.

9. The article according to any one of the preceding Claims, which is chosen from bearings, bushings, gears, sleeve bearings, seal rings, journal bearings, thrust washers, rub strips, slides, bearing pads, ball bearings, valve seats, piston rings, valve guides, compressor vanes, seals, stationary washers and dynamic washers.

10. The article according to any one of Claims 1 to 8, which is a chemical mechanical planarization retaining rings.

11. A polymer composition, which is especially well suited for the manufacture of a part having a bearing surface, of an article, said polymer composition comprising at least one poly(aryl ether ketone) (P1) and at least one poly(arylene sulfide) (P2), wherein :
- the combined weight of the poly(aryl ether ketone) (P1) and the poly(arylene sulfide) (P2), based on the total weight of the polymer composition, is lower than 0.75, and
- the poly(arylene sulfide) (P2) over poly(aryl ether ketone) (P1) weight ratio is comprised between 0.2 and 0.8;
and wherein the polymer composition further comprises at least one friction reducing additive, the friction reducing additive over polymer composition weight ratio is of at least 0.10.

12. The polymer composition according to Claim 11, wherein the friction reducing additive over polymer composition weight ratio is of at least 0.30.

13. The polymer composition according to Claim 11 or 12, wherein :
- the poly(aryl ether ketone) (P1) is a poly(ether ether ketone) and the poly(arylene sulfide) (P2) is a poly(phenylene sulfide),
- the combined weight of the poly(aryl ether ketone) (P1) and the poly(arylene sulfide) (P2), based on the total weight of the polymer composition, is of at least 0.40, and
- the poly(arylene sulfide) (P2) over poly(aryl ether ketone) (P1) weight ratio ranges from 0.3 to 0.7.

## Patentansprüche

1. Gegenstand, umfassend wenigstens einen Teil mit einer tragenden Fläche, wobei der Teil aus einer Polymerzusammensetzung besteht, die wenigstens ein Poly(aryletherketon) (P1) und wenigstens ein Poly(arylensulfid) (P2) umfasst, wobei:
- das kombinierte Gewicht von Poly(aryletherketon) (P1) und Poly(arylensulfid) (P2) bezogen auf das Gesamtgewicht der Polymerzusammensetzung kleiner als 0,75 ist und
- das Gewichtsverhältnis von Poly(arylensulfid) (P2) zu Poly(aryletherketon) (P1) zwischen 0,2 und 0,8 beträgt;
und wobei die Polymerzusammensetzung ferner wenigstens einen reibungsverringernden Zusatzstoff umfasst, wobei das Gewichtsverhältnis von reibungsverringerndem Zusatzstoff zu Polymerzusammensetzung wenigstens 0,10 beträgt.

2. Gegenstand gemäß Anspruch 1, wobei das Poly(aryletherketon) (P1) ein Poly(etheretherketon) ist und das Poly(arylensulfid) (P2) ein Poly(phenylensulfid) ist.

3. Gegenstand gemäß Anspruch 1 oder 2, wobei das Gewichtsverhältnis von reibungsverrigerndem Zusatzstoff zu Polymerzusammensetzung wenigstens 0,30 beträgt.

4. Gegenstand gemäß Anspruch 3, wobei das kombinierte Gewicht von Poly(aryletherketon) (P1) und Poly(arylensulfid) (P2) bezogen auf das Gesamtgewicht der Polymerzusammensetzung wenigstens 0,40 beträgt und das Gewichtsverhältnis von reibungsverringerndem Zusatzstoff zu Polymerzusammensetzung wenigstens 0,40 beträgt.

5. Gegenstand gemäß einem der Ansprüche 1 bis 4, wobei der reibungsverringernde Zusatzstoff ausgewählt ist aus der Gruppe bestehend aus Fluorpolymeren, Kohlenstofffasern, Polymerfasern, Graphit und Gemischen davon.

6. Gegenstand gemäß Anspruch 5, wobei der reibungsverringernde Zusatzstoff entweder ein Gemisch von Kohlenstoffasern und Graphit oder ein Gemisch von Kohlenstofffasern und Poly(tetrafluorethylen) ist, wobei das entsprechende Gewichtsverhältnis von Kohlenstofffasern zu Graphit bzw. Kohlenstoffasern zu Poly(tetrafluorethylen) in dem Bereich zwischen 1,75 und 2,25 liegt.

7. Gegenstand gemäß einem der vorstehenden Ansprüche, wobei das Gewichtsverhältnis von Poly(arylensulfid) (P2) zu Poly(aryletherketon) (P1) in dem Bereich von 0,3 bis 0,7 liegt.

8. Gegenstand gemäß Anspruch 7, wobei das Gewichtsverhältnis von Poly(arylensulfid) (P2) zu Poly(aryletherketon) (P1) in dem Bereich von 0,4 bis 0,6 liegt.

9. Gegenstand gemäß einem der vorstehenden Ansprüche, ausgewählt aus Lagern, Buchsen, Zahnrädern, Gleitlagern, Dichtungsringen, Achslagern, Druckscheiben, Reibungsstreifen, Schiebern, Lagerkissen, Kugellagern, Ventilsitzen, Kolbenringen, Ventilführungen, Verdichterschaufeln, Dichtungen, stationären Unterlegscheiben und beweglichen Unterlegscheiben.

10. Gegenstand gemäß einem der Ansprüche 1 bis 8, der ein chemischmechanischer Planarisierungs-Haltering ist.

11. Polymerzusammensetzung, die besonders gut für die Herstellung eines Teils mit einer tragenden Fläche eines Gegenstands geeignet ist, wobei die Polymerzusammensetzung wenigstens ein Poly(aryletherketon) (P1) und wenigstens ein Poly(arylensulfid) (P2) umfasst, wobei:
- das kombinierte Gewicht von Poly(aryletherketon) (P1) und Poly(arylensulfid) (P2) bezogen auf das Gesamtgewicht der Polymerzusammensetzung kleiner als 0,75 ist und
- das Gewichtsverhältnis von Poly(arylensulfid) (P2) zu Poly(aryletherketon) (P1) zwischen 0,2 bis 0,8 beträgt;
und wobei die Polymerzusammensetzung ferner wenigstens einen reibungsverringernden Zusatzstoff umfasst, wobei das Gewichtsverhältnis von reibungsverringerndem Zusatzstoff zu Polymerzusammensetzung wenigstens 0,10 beträgt.

12. Polymerzusammensetzung gemäß Anspruch 11, wobei das Gewichtsverhältnis von reibungsverringerndem Zusatzstoff zu Polymerzusammensetzung wenigstens 0,30 beträgt.

13. Polymerzusammensetzung gemäß Anspruch 11 oder 12, wobei:
- das Poly(aryletherketon) (P1) ein Poly(etheretherketon) ist und das Poly(arylensulfid) (P2) ein Poly(phenylensulfid) ist,
- das kombinierte Gewicht von Poly(aryletherketon) (P1) und Poly(arylensulfid) (P2) bezogen auf das Gesamtgewicht der Polymerzusammensetzung wenigstens 0,40 beträgt und
- das Gewichtsverhältnis von Poly(arylensulfid) (P2) zu Poly(aryletherketon) (P1) in dem Bereich von 0,3 bis 0,7 liegt.

## Revendications

1. Article comprenant au moins une partie ayant une surface portante, ladite partie étant composée d'une composition polymère comprenant au moins une poly(aryléthercétone) (P1) et au moins un poly(sulfure d'arylène) (P2), dans lequel :
- le poids combiné de la poly(aryléthercétone) (P1) et du poly(sulfure d'arylène (P2), par rapport au poids total de la composition polymère, est inférieur à 0,75, et
- le rapport en poids du poly(sulfure d'arylène) (P2) à la poly(aryléthercétone) (P1) est compris entre 0,2 et 0,8 ;
et la composition polymère comprenant en outre au moins un additif réducteur de friction, le rapport en poids de l'additif réducteur de friction à la composition polymère étant d'au moins 0,10.

2. Article selon la revendication 1, dans lequel la poly(aryléthercétone) (P1) est une poly(étheréthercétone), et le poly(sulfure d'arylène) (P2) est un poly(sulfure de phénylène).

3. Article selon la revendication 1 ou 2, dans lequel le rapport en poids de l'additif réducteur de friction à la composition polymère est d'au moins 0,30.

4. Article selon la revendication 3, dans lequel le poids combiné de la poly(aryléthercétone) (P1) et du poly(sulfure d'arylène) (P2), par rapport au poids total de la composition polymère, est d'au moins 0,40, et le rapport en poids de l'additif réducteur de friction à la composition polymère est d'au moins 0,40.

5. Article selon l'une quelconque des revendications 1 à 4, dans lequel l'additif réducteur de friction est choisi dans le groupe consistant en les fluoropolymères, une fibre de carbone, les fibres polymères, le graphite et les mélanges de ceux-ci.

6. Article selon la revendication 5, dans lequel l'additif réducteur de friction est un mélange d'une fibre de carbone et de graphite ou un mélange d'une fibre de carbone et de poly(tétrafluoréthylène), respectivement le rapport en poids de la fibre de carbone au graphite ou le rapport en poids de la fibre de carbone au poly(tétrafluoréthylène) étant compris dans la plage de 1,75 à 2,25.

7. Article selon l'une quelconque des revendications précédentes, dans lequel le rapport en poids du poly(sulfure d'arylène) (P2) à la poly(aryléthercétone) (P1) est compris dans la plage de 0,3 à 0,7.

8. Article selon la revendication 7, dans lequel le rapport en poids du poly(sulfure d'arylène) (P2) à la poly(aryléthercétone) (P1) est compris dans la plage de 0,4 à 0,6.

9. Article selon l'une quelconque des revendications précédentes, qui est choisi parmi les paliers, les coussinets, les engrenages, les paliers lisses, les bagues d'étanchéité, les coussinets de palier, les rondelles de butée, les bandes de frottement, les coulisses, les patins, les roulements à billes, les sièges de soupape, les segments de piston, les guides de soupape, les aubes de compresseur, les joints d'étanchéité, les rondelles fixes et les rondelles dynamiques.

10. Article selon l'une quelconque des revendications 1 à 8, qui est une bague de retenue pour polissage mécano-chimique.

11. Composition polymère, qui est particulièrement bien adaptée à la fabrication d'une pièce ayant une surface portante, d'un article, ladite composition polymère comprenant au moins une poly(aryléthercétone) (P1) et au moins un poly(sulfure d'arylène) (P2), dans laquelle :
- le poids combiné de la poly(aryléthercétone) (P1) et du poly(sulfure d'arylène (P2), par rapport au poids total de la composition polymère, est inférieur à 0,75, et
- le rapport en poids du poly(sulfure d'arylène) (P2) à la poly(aryléthercétone) (P1) est compris entre 0,2 et 0,8 ;
et la composition polymère comprenant en outre au moins un additif réducteur de friction, le rapport en poids de l'additif réducteur de friction à la composition polymère étant d'au moins 0,10.

12. Composition polymère selon la revendication 11, dans laquelle le rapport en poids de l'additif réducteur de friction à la composition polymère est d'au moins 0,30.

13. Composition polymère selon la revendication 11 ou 12, dans laquelle
- la poly(aryléthercétone) (P1) est une poly(étheréthercétone), et le poly(sulfure d'arylène) (P2) est un poly(sulfure de phénylène),
- le poids combiné de la poly(aryléthercétone) (P1) et du poly(sulfure d'arylène) (P2), par rapport au poids total de la composition polymère, est d'au moins 0,40, et
- le rapport en poids du poly(sulfure d'arylène) (P2) à la poly(aryléthercétone) (P1) est compris dans la plage de 0,3 à 0,7.
